# DEMANDE DE BREVET EUROPEEN

(11) **EP 1 544 049 A1**
(43) Date de publication de la demande: **22.06.2005**
(21) Numéro de dépôt: 04293032.1
(22) Date de dépôt: 17.12.2004
(51) Int. Cl.: B60R 21/01, B60K 28/14

(54) **Système de contrôle de l'alimentation en énergie d'organes fonctionnels d'un réseau de bord de véhicules**

(30) Priorité: 19.12.2003 FR 0315101
(71) Demandeur: Peugeot Citroen Automobiles S.A., 78140 Vélizy Villacoublay (FR)
(72) Inventeur: Burgurubu, Philippe, 78000 Versailles (FR)
(74) Mandataire: Habasque, Etienne Joel Jean-François

(57) **Abrégé**

Ce système de contrôle de l'alimentation de puissance en énergie électrique d'organes fonctionnels (1,2) d'un réseau de bord d'un véhicule automobile, raccordés à une source d'alimentation en énergie électrique (6), embarquée à bord du véhicule, à travers une ligne d'alimentation de puissance (3) et des moyens de commande (5), est caractérisé en ce que la ligne d'alimentation de puissance (3) est associée à des moyens formant fusible à déclenchement pyrotechnique (9,12,13), commandés par des moyens (10) de détection d'anomalie de fonctionnement et aux bornes desquels sont connectés en parallèle des moyens (11) de limitation de la puissance d'alimentation des organes fonctionnels.

## Description

La présente invention concerne un système de contrôle de l'alimentation de puissance en énergie électrique d'organes fonctionnels d'un réseau de bord d'un véhicule automobile.

On sait que dans ce type de systèmes, les organes fonctionnels du réseau de bord sont raccordés à une source d'alimentation en énergie électrique embarquée à bord du véhicule, et formée par exemple par une batterie, à travers une ligne d'alimentation de puissance et des moyens de commande.

Il est connu que sur des systèmes électriques de ce type, fonctionnant peu d'heures par rapport à leur durée de vie globale, on supprime la mise à disposition de la puissance pour les périodes où le besoin n'est pas justifié.

Cette mise hors service évite tout risque de fonctionnement accidentel ou d'incident plus sérieux lié à la présence de cette tension en permanence sur le réseau ou en interne dans les organes fonctionnels.

Certaines évolutions d'architectures électriques de bord des véhicules font que cette suppression de mise à disposition de puissance n'est plus possible.

En particulier, ceci est vrai pour des véhicules automobiles de nouvelle génération, dits multiplexés, dans lesquels un réseau de transmission d'informations multiplexé est embarqué à bord du véhicule.

En effet, dans ce type de véhicules, le fait de « couper le contact » ne fait qu'engager une demande de mise en veille du système, mais laisse en permanence, sur la plupart des organes fonctionnels, la tension et la mise à disposition de la pleine puissance.

Il convient alors de surveiller la puissance entrant dans ces architectures pendant ces périodes de veille et de limiter cette puissance à une valeur négligeable dès que celle-ci prend un caractère anormal, et ceci de façon automatique, sans perturber le fonctionnement du système global lorsqu'il est en phase d'utilisation normale, tout en ayant une très grande fiabilité, d'une part, sur la non-perturbation et la non-activation du système en période d'utilisation et d'autre part, sur cette certitude de détection et de limitation de puissance en période de surveillance.

On a alors proposé dans l'état de la technique, des systèmes utilisant des relais de fort calibre et des mesures de courant avec shunt pour commander différents relais, mais ces organes n'ont pas le niveau de fiabilité attendu dans ce type d'applications.

Le but de l'invention est donc de résoudre ces problèmes.

A cet effet, l'invention a pour objet un système de contrôle de l'alimentation de puissance en énergie électrique d'organes fonctionnels d'un réseau de bord d'un véhicule automobile, raccordés à une source d'alimentation en énergie électrique, embarquée à bord du véhicule, à travers une ligne d'alimentation de puissance et des moyens de commande, caractérisé en ce que la ligne d'alimentation de puissance est associée à des moyens formant fusible à déclenchement pyrotechnique, commandés par des moyens de détection d'anomalie de fonctionnement et aux bornes desquels sont connectés en parallèle des moyens de limitation de la puissance d'alimentation des organes fonctionnels.

Suivant d'autres caractéristiques :
- les moyens de limitation de puissance comprennent une impédance ;
- les moyens de limitation de puissance comprennent une résistance ;
- des moyens formant shunt sont raccordés en série avec les moyens formant fusible ;
- des moyens de court-circuitage sont connectés en parallèle aux bornes des moyens formant shunt et sont pilotés par les moyens de commande afin de court-circuiter ceux-ci en fonctionnement normal du véhicule ;
- les moyens de détection d'anomalie de fonctionnement comprennent des moyens d'analyse du courant circulant dans la ligne d'alimentation de puissance ;
- les moyens d'analyse du courant comprennent des moyens de mesure de la tension aux bornes des moyens formant fusible ;
- les moyens d'analyse du courant comprennent des moyens de mesure de la tension aux bornes des moyens formant shunt ;
- les moyens de détection d'anomalie de fonctionnement comprennent des moyens de détection d'un choc du véhicule ;
- les moyens de détection d'anomalie sont intégrés dans le boîtier contenant les moyens de détection de choc ;
- les moyens de détection d'anomalie comprennent des moyens de calibrage ;
- les moyens de calibrage peuvent être commandés depuis l'extérieur des moyens de détection d'anomalie et sont reliés à ceux-ci par une ligne de calibration.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure et le fonctionnement d'un exemple de réalisation d'un système selon l'invention ;
- la Fig.2 représente une vue d'une partie d'un tel système selon une première variante de réalisation ; et
- la Fig.3 représente une vue d'une partie d'un tel système selon une seconde variante de réalisation.

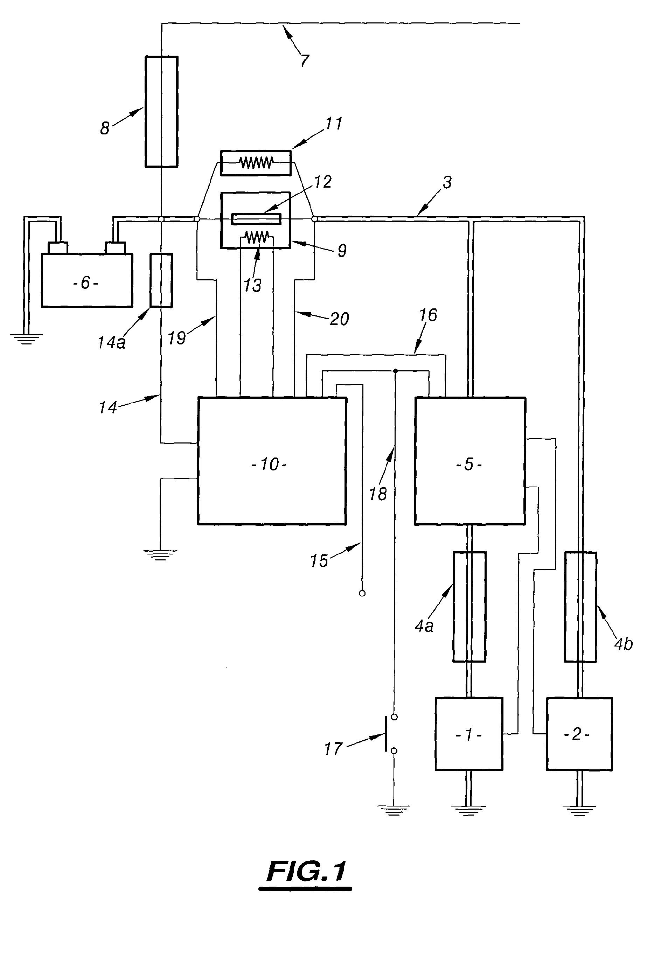

On a en effet illustré sur ces figures, et en particulier sur la figure 1, un système de contrôle de l'alimentation de puissance en énergie électrique d'organes fonctionnels d'un réseau de bord d'un véhicule automobile.

Sur cette figure, deux organes fonctionnels désignés par les références générales 1 et 2 sont illustrés et sont raccordés à une ligne d'alimentation de puissance désignée par la référence générale 3.

Chacun de ces organes fonctionnels est par exemple protégé par des moyens de protection correspondants, tels que par exemple des fusibles 4a et 4b respectivement.

Le fonctionnement de ces organes fonctionnels est contrôlé par l'intermédiaire de moyens de commande désignés par la référence générale 5 sur cette figure, comportant tout calculateur approprié adapté pour délivrer des ordres de commande à ces organes et pour assurer ou non le contrôle de la distribution en énergie vers ceux-ci.

Ainsi par exemple, l'organe fonctionnel 1 est relié en sortie de la partie de puissance de ce calculateur, pour être alimenté en puissance à travers celui-ci, tandis que l'organe fonctionnel 2 est relié directement à la ligne d'alimentation de puissance 3.

Cette ligne d'alimentation de puissance est raccordée à une source d'alimentation en énergie électrique embarquée à bord du véhicule, formée par exemple par une batterie d'alimentation, désignée par la référence générale 6 sur cette figure.

Une ligne d'alimentation extérieure distincte de la ligne de puissance 3 et désignée par la référence générale 7 sur cette figure, peut également être envisagée, cette ligne étant protégée par exemple par un fusible désigné par la référence générale 8.

Dans le système de contrôle selon l'invention, la ligne d'alimentation de puissance est associée à des moyens formant fusible à déclenchement pyrotechnique, désignés par la référence générale 9, commandés par des moyens de détection d'une anomalie de fonctionnement, désignés par la référence générale 10, et aux bornes desquels sont connectés en parallèle des moyens de limitation de la puissance d'alimentation des organes fonctionnels, ces moyens étant désignés par la référence générale 11.

Dans l'exemple de réalisation représenté sur cette figure, ces moyens de limitation de puissance, désignés par la référence générale 11, comprennent par exemple une impédance formée par une résistance.

Les moyens formant fusible à déclenchement pyrotechnique sont bien connus dans l'état de la technique et comprennent par exemple un élément fusible désigné par la référence générale 12, associé à un organe pyrotechnique 13 de déclenchement et de coupure de l'élément fusible.

Les moyens de détection d'anomalie 10 peuvent être alimentés directement à partir de la source d'énergie par une ligne distincte de la ligne d'alimentation de puissance 3, cette ligne étant désignée par la référence générale 14 sur cette figure et étant protégée par un fusible référencé 14a sur cette même figure.

Ces moyens de détection peuvent également être reliés à une ligne de calibration désignée par la référence générale 15 et reliée à des moyens de calibrage (non représentés), aux moyens de commande 5 des organes fonctionnels du véhicule, par une ligne 16, et à des moyens formant contact du véhicule 17, par une ligne correspondante 18.

Ces moyens de détection d'anomalie de fonctionnement sont également formés par exemple par une unité de traitement d'informations et comprennent par exemple des moyens d'analyse du courant circulant dans la ligne d'alimentation de puissance 3.

Ainsi par exemple, ces moyens de détection peuvent être reliés par deux lignes 19 et 20 aux bornes des moyens formant fusible, ceux-ci opérant alors à la manière d'un shunt, et présentant à leurs bornes une tension fonction du courant traversant ceux-ci, c'est-à-dire circulant dans la ligne de puissance 3.

On conçoit alors que grâce à un tel système, les moyens de détection d'anomalie 10 sont adaptés pour surveiller le courant circulant dans la ligne d'alimentation de puissance 3 des organes fonctionnels pour, en cas de détection d'une anomalie quelconque, déclencher la mise à feu de l'élément pyrotechnique 13, et donc déclencher le fusible 12, afin de le couper.

L'alimentation en énergie des organes fonctionnels n'est alors assurée qu'à travers les moyens 11 de limitation de puissance disponible, qui sont alors adaptés pour délivrer une puissance limitée, suffisante pour maintenir les organes fonctionnels en état de veille et indiquer à l'utilisateur un défaut de fonctionnement quelconque, mais insuffisante pour engendrer des incidents sérieux sur le réseau de bord.

Bien entendu, les moyens de détection d'anomalie peuvent être constitués par d'autres organes que des organes de surveillance du courant circulant sur la ligne d'alimentation de puissance.

Ainsi par exemple, ces moyens de détection d'anomalie peuvent également être raccordés à des moyens de détection de choc du véhicule, pour déclencher le fonctionnement des moyens formant fusible à déclenchement pyrotechnique, afin d'assurer la sécurisation du véhicule.

Les moyens de détection d'anomalie peuvent alors être intégrés dans le boîtier contenant les moyens de détection de choc.

Ainsi, la présente invention propose d'utiliser une technologie fiable de pyrotechnie automobile pour mesurer et limiter, voire couper si nécessaire, le courant pendant les périodes de veille en cas de nécessité.

On se sert alors de moyens formant fusible pyrotechnique pour réaliser d'une part, la fonction de coupure, et d'autre part, la fonction de shunt, permettant de mesurer une tension, image du courant circulant dans le réseau.

Le fusible est en effet un organe qui présente une certaine résistance interne et cette résistance est utilisée en tant que shunt.

Les moyens de détection d'anomalie sont formés par un boîtier électronique qui scrute régulièrement cette tension pendant les phases de veille du réseau par exemple et commande automatiquement la coupure du fusible.

La résistance en parallèle aux bornes du fusible permet alors de laisser le système sous tension tout en limitant le courant maximum disponible pour celui-ci.

Cette puissance limitée permet lors du réveil du système, de pouvoir alerter l'utilisateur sur l'activation du système de protection par fusible pyrotechnique pendant la période de veille.

Ce fusible pyrotechnique peut également jouer son rôle de fusible protégeant contre les risques de court-circuit en cas d'accident, comme par exemple un pincement de câble en sortie de batterie ou encore être déclenché par un boîtier de commande des organes de sécurité embarqués tels que par exemple les coussins gonflables de sécurité ou autres.

Les moyens de détection d'anomalie reçoivent donc des informations relatives d'une part au courant circulant dans la ligne et d'autre part, au réseau de bord protégé pour discerner les phases pendant lesquelles il est autorisé à mettre à feu le système de protection.

Plusieurs niveaux de sensibilité suivant la situation de vie de ce réseau peuvent être envisagés.

En effet, on peut distinguer des états de vie du réseau parmi des états en veille, en réveil, moteur tournant, distribution de puissance maîtrisée ou non, etc...

La présence de ces moyens permet également de réaliser une calibration de mesure de courant en fonction des dispersions de résistance du shunt formé par le fusible.

La logique de déclenchement peut en effet tenir compte non seulement du courant mesuré, mais également de son évolution, de sa vitesse de variation et d'autres paramètres permettant d'évaluer l'importance du risque, comparée aux caractéristiques de situation de vie normale ou exceptionnelle des organes alimentés sous tension permanente.

Ces différentes informations sont par exemple issues de moyens de commande des organes fonctionnels, par dialogue entre ceux-ci et les moyens de détection d'anomalie.

Les échanges d'informations ont également lieu entre les moyens de détection d'anomalie et la clé de contact du véhicule, à travers la ligne 18, et la ligne de calibration 15, reliée à des moyens de calibrage (non représentés) pouvant être déclenchés à la demande depuis l'extérieur des moyens 10, permet, dans une phase de calibrage des moyens de détection d'anomalie, de prendre en compte la valeur exacte de la résistance du fusible pour avoir une mesure précise du courant circulant dans la ligne d'alimentation de puissance.

Lorsque le réseau est par exemple en veille, la mesure régulière et cyclique de la tension aux bornes du fusible 12 permet de connaître l'intensité du courant passant dans la ligne d'alimentation de puissance et d'adapter les différents paramètres de cette mesure (fréquence et durée), en cas d'anomalie, pour affiner cette mesure et ne déclencher la protection que lorsque cela est vraiment nécessaire, car le déclenchement du fusible met le véhicule en panne.

Des moyens de stockage de données intégrés dans les moyens de détection d'anomalie peuvent également conserver une trace des anomalies détectées pour une analyse ultérieure.

L'analyse du courant circulant dans la ligne d'alimentation de puissance peut également se faire suivant plusieurs critères avec des seuils pour ces différents critères, ces seuils étant par exemple variables suivant les différentes situations de vie du véhicule, de façon à couvrir toutes celles-ci, que le réseau soit en état de veille, de réveil, moteur tournant, vitesse enclenchée, etc..

Cette analyse peut également se faire suivant les critères classiques de tout système de protection pour les mêmes paramètres surveillés, c'est-à-dire la valeur du paramètre, sa moyenne, sa dérivée, le nombre d'inversions de sens de la dérivée, etc..

Une fois la logique de protection déclenchée, les moyens de détection d'anomalie 10 activent la mise à feu de l'élément pyrotechnique 13, qui coupe le fusible 12.

La résistance 11 de limitation de puissance limite alors à environ par exemple 500 milliampères le courant maximum que peut débiter la batterie.

Ce courant est suffisamment faible pour supprimer tout risque d'incident au niveau du véhicule, mais permet de maintenir en veille par exemple le calculateur formant les moyens de commande 5 des organes fonctionnels, de façon à lui permettre de dialoguer avec les moyens de détection d'anomalie 10 et de signaler aux utilisateurs du véhicule que celui-ci est provisoirement inapte à un service normal.

Comme cela a été indiqué précédemment, cette coupure des moyens formant fusible peut également être déclenchée en cas de choc du véhicule.

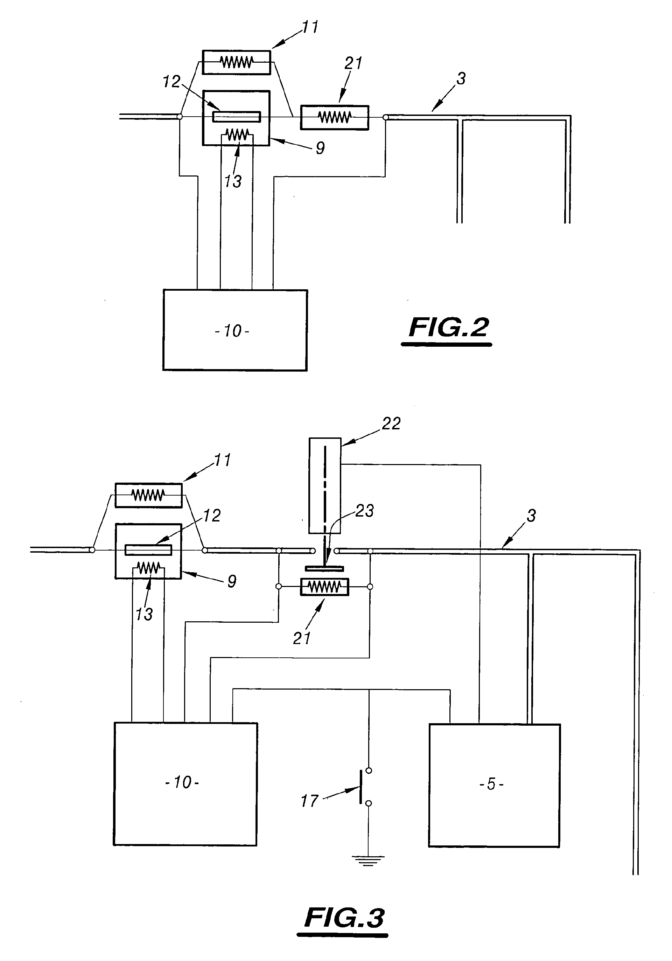

Bien entendu, d'autres modes de réalisation peuvent être envisagés comme cela est illustré par exemple sur la figure 2.

On reconnaît en effet sur cette figure 2, la ligne de transmission de puissance 3, les moyens de détection d'anomalie 10, la résistance de limitation de puissance 11, le fusible 12 et le déclencheur pyrotechnique 13.

Dans cet exemple de réalisation, un shunt 21 est connecté en série avec les moyens formant fusible pour obtenir une tension plus forte à l'entrée des moyens de détection d'anomalie.

Un shunt bobiné peut également être envisagé afin d'utiliser l'effet de self d'une telle conception, les variations rapides de courant provoquées par des arcs fugitifs délivrant de fortes tensions aux bornes de l'ensemble fusible et self.

Une autre variante encore est illustrée sur la figure 3, où l'on reconnaît la ligne de transmission de puissance 3, les moyens de détection d'anomalie 10, les moyens de commande 5, le shunt 21, la résistance de limitation de puissance 11, le fusible 12 et l'élément de déclenchement pyrotechnique 13, de même que le contact 17 du véhicule.

Dans cette variante de réalisation, le shunt 21 est également utilisé, ce shunt présentant une forte valeur permettant d'obtenir une tension importante à ses bornes, ce qui permet de simplifier les moyens de détection d'anomalie 10.

Cependant, pour assurer un fonctionnement correct de cette installation, on utilise un relais 22 associé à un contact 23 connecté en parallèle aux bornes de ce shunt, pour ne pas détériorer celui-ci par un courant trop important en période de fonctionnement normal du véhicule.

En effet, le relais 22 peut alors être piloté par les moyens de commande 5 afin de fermer le contact 23 et court-circuiter le shunt 21 afin d'éviter que celui-ci ne soit détérioré par des courants trop importants lors du fonctionnement normal du véhicule.

On notera que dans les deux exemples de réalisation illustrés sur les figures 2 et 3, le shunt permet d'augmenter la tension d'analyse du courant circulant dans la ligne d'alimentation de puissance.

Bien entendu, d'autres modes de réalisation encore peuvent être envisagés.

## Revendications

1. Système de contrôle de l'alimentation de puissance en énergie électrique d'organes fonctionnels (1,2) d'un réseau de bord d'un véhicule automobile, raccordés à une source d'alimentation en énergie électrique (6), embarquée à bord du véhicule, à travers une ligne d'alimentation de puissance (3) et des moyens de commande (5), **caractérisé en ce que** la ligne d'alimentation de puissance (3) est associée à des moyens formant fusible à déclenchement pyrotechnique (9,12,13), commandés par des moyens (10) de détection d'anomalie de fonctionnement et aux bornes desquels sont connectés en parallèle des moyens (11) de limitation de la puissance d'alimentation des organes fonctionnels.

2. Système selon la revendication 1, **caractérisé en ce que** les moyens de limitation de puissance comprennent une impédance (11).

3. Système selon la revendication 2, **caractérisé en ce que** les moyens de limitation de puissance comprennent une résistance (11).

4. Système selon l'une quelconque des revendications précédentes, **caractérisé en ce que** des moyens formant shunt (21) sont raccordés en série avec les moyens formant fusible (9).

5. Système selon la revendication 4, **caractérisé en ce que** des moyens de court-circuitage (22,23) sont connectés en parallèle aux bornes des moyens formant shunt (21) et sont pilotés par les moyens de commande (5) afin de court-circuiter ceux-ci en fonctionnement normal du véhicule.

6. Système selon l'une quelconque des revendications précédentes, **caractérisé en ce que** les moyens (10) de détection d'anomalie de fonctionnement comprennent des moyens d'analyse du courant circulant dans la ligne d'alimentation de puissance (3).

7. Système selon la revendication 6, **caractérisé en ce que** les moyens (10) d'analyse du courant comprennent des moyens de mesure de la tension aux bornes des moyens formant fusible.

8. Système selon les revendications 4, 5 et 6, **caractérisé en ce que** les moyens (10) d'analyse du courant comprennent des moyens de mesure de la tension aux bornes des moyens formant shunt (21).

9. Système selon l'une quelconque des revendications précédentes, **caractérisé en ce que** les moyens (10) de détection d'anomalie de fonctionnement comprennent des moyens de détection d'un choc du véhicule.

10. Système selon la revendication 9, **caractérisé en ce que** les moyens de détection d'anomalie sont intégrés dans le boîtier contenant les moyens de détection de choc.

11. Système selon l'une quelconque des revendications précédentes, **caractérisé en ce que** les moyens (10) de détection d'anomalie comprennent des moyens de calibrage.

12. Système selon la revendication 11, **caractérisé en ce que** les moyens de calibrage peuvent être commandés depuis l'extérieur des moyens (10) de détection d'anomalie et sont reliés à ceux-ci par une ligne de calibration (15).
